# FASCICULE DE BREVET EUROPEEN

(11) **EP 1 772 198 B1**
(45) Date de publication et mention de la délivrance du brevet: **28.04.2010**
(21) Numéro de dépôt: 06291544.2
(22) Date de dépôt: 03.10.2006
(51) Int. Cl.: B05D 5/06, B05D 1/32, B05C 3/09, B05D 1/00

(54) **Procédé de coloration d'une lentille par spin-coating et lentille colorée obtenue par ce procédé**
Verfahren zum Färben einer Linse durch Zentrifugalbeschichtung und erhaltene Linse
Method for coloring a lens by spin-coating and obtained lens

(30) Priorité: 04.10.2005 FR 0510143
(43) Date de publication de la demande: 11.04.2007
(73) Titulaire: ESSILOR INTERNATIONAL (COMPAGNIE GENERALE D'OPTIQUE), 94220 Charenton-le-Pont (FR)
(72) Inventeur: Couto, Jorge c/o Essilor International, 94220 Charenton Le Pont (FR); Henky, Francis c/o Essilor International, 94220 Charenton Le Pont (FR); Robin, David c/o Essilor International, 94220 Charenton Le Pont (FR)
(74) Mandataire: Cabinet Plasseraud

(56) Documents cités:
- WO-A-2004/064055
- WO-A2-01/94103
- US-A1- 2003 145 941
- US-A1- 2003 205 196

## Description

L'invention s'intéresse au domaine de la coloration des lentilles optiques, notamment ophtalmiques, et en particulier à la réalisation de motifs colorés ou d'un gradient de coloration sur des lentilles. L'invention s'intéresse également à la technique de spin-coating, et à son utilisation pour la fabrication de lentilles colorées.

En effet, l'invention concerne un procédé de coloration de lentilles optiques par spin-coating, et notamment de lentilles ophtalmiques, correctrices ou non, solaires ou non.

Les lentilles de la présente invention sont susceptibles d'être constituées à partir de nombreux substrats de natures différentes, par exemple du type verre organique tel que le diéthylène glycol bis (allyl carbonate) plus connu sous le nom de CR39, ou du type polycarbonate.

Dans la présente invention, on utilise le terme optique pour désigner notamment l'optique ophtalmique, l'optique photographique et l'optique d'instrumentation.

Différentes méthodes d'obtention des gradients de coloration sur des substrats ophtalmiques, tels que par exemple le CR39 ou le polycarbonate, sont connues de l'art antérieur. Par exemple, la technique de coloration par trempage du substrat dans un vernis colorable est bien connue. Il existe aussi de nombreuses publications sur l'application d'un vernis coloré par impression par jet d'encre.

De même, différentes méthodes d'obtention de motifs colorés sont connues. Par exemple, pour réaliser un motif coloré sur un support, on peut le peindre ou l'imprimer au moyen de différentes techniques telles que notamment la tampographie qui est très utilisée pour appliquer des décors sur des verres optiques.

D'autres techniques, comme le marquage au laser, permettant un décapage de la couche de vernis, sont connues et mises en oeuvre afin de réaliser un marquage discret avec un différentiel sur l'aspect de surface.

Par ailleurs, l'homme de l'art sait utiliser la méthode du spin-coating ou de dépôt par centrifugation pour appliquer un vernis ; le spin-coating est une méthode simple et rapide à mettre en oeuvre, reproductible, et applicable pour tout type de substrat, quel que soit le matériau le constituant.

Le document US-A-2003/0205196 décrit le contrôle de l'épaisseur d'un revêtement déposé par spin-coating sur un substrat au moyen du contrôle de la variation de la température.

Cependant, cette méthode est utilisée par l'homme de l'art uniquement pour effectuer des dépôts de vernis équi-épais, ce qui signifie d'épaisseur égale en tous points de la surface de la lentille. En particulier, l'homme de l'art sait appliquer un vernis coloré sur une lentille par spin-coating, et sait que l'utilisation de cette technique lui permettra d'obtenir systématiquement une teinte uniforme sur toute la surface de la lentille.

Ainsi, la méthode de spin-coating en tant que telle, ne permet a priori pas de réaliser des gradients ou des motifs colorés sur des lentilles. En effet, pour obtenir un gradient de coloration ou des motifs colorés sur des lentilles, il est nécessaire de déposer au moins une couche de vernis d'épaisseur variable. Plus l'épaisseur du vernis est importante et plus la coloration est intense.

Le problème technique de l'invention est d'utiliser le spin-coating pour le dépôt d'au moins une couche de vernis d'épaisseur variable, ce vernis étant de préférence coloré.

La solution mise en oeuvre par la Demanderesse implique une évaporation différentielle du vernis, de préférence coloré, appliqué par spin-coating sur le substrat, en fonction de la température de la lentille.

Le procédé de coloration de l'invention présente de nombreux avantages : il est indépendant de la nature du substrat, il est reproductible et la teinte de coloration est facile à contrôler puisqu'elle dépend de la température appliquée à la surface de la lentille pour un vernis et un substrat donnés.

Enfin, le procédé de l'invention est plus simple et plus rapide que les techniques de l'art antérieur.

Par ce procédé, une intensité de coloration forte (teinte foncée) pour la vision de loin et une intensité plus faible (teinte claire) pour la vision de près peuvent être obtenues.

Le procédé de l'invention peut également être utilisé pour l'obtention de motifs colorés sur une lentille. Ainsi, l'application d'un tampon représentant un motif spécifique, par exemple un logo, préalablement chauffé ou refroidi avant application à la surface de la lentille, permet d'obtenir le report du motif inscrit sur le tampon par la différence de teinte.

Ainsi, l'invention concerne un procédé de coloration de lentilles par spin-coating qui permet d'obtenir le dépôts d'au moins une couche de vernis d'épaisseur variable et de ce fait, des lentilles colorées par spin-coating qui peuvent avoir un gradient de coloration ou un motif.

Plus précisément, l'invention propose un procédé de coloration de lentilles par spin-coating, et notamment d'obtention d'un gradient de coloration ou d'un motif coloré, ledit procédé étant caractérisé en ce qu'il comprend les étapes de :
a. élever ou diminuer la température d'au moins 2 °C, de préférence d'au moins 10°C, très préférentiellement de 40 à 60°C, en au moins une zone de la surface de la lentille par tout moyen approprié,
b. simultanément ou successivement, déposer par spin-coating un vernis, de préférence coloré, comprenant un solvant volatile sur toute la surface de ladite lentille.

Par volatile au sens de la présente invention, on entend tout solvant susceptible de s'évaporer sous l'effet de la température à laquelle est soumise au moins une zone de la lentille. Il est entendu que le caractère volatile du solvant est en relation directe avec sa propriété de tension de vapeur.

Par zone, on entend tout ou partie de la surface d'une face de la lentille.

Le moyen approprié pour élever ou diminuer la température comprend une conduction par un solide ou un liquide ou une convexion par un gaz. Ce moyen comprend notamment d'appliquer un tampon refroidi ou chauffé sur ladite zone, d'exposer ladite zone à un rayonnement UV ou IR, de soumettre ladite zone à l'action d'un lit d'air chaud ou d'air refroidi notamment sous azote, ou de mettre en contact ladite zone avec un liquide chauffé ou refroidi par rapport à la température ambiante. De préférence, le liquide est chauffé à une température de 40-80 °C, de préférence environ 70°C.

Selon un premier mode de réalisation, l'élévation ou la diminution de température de ladite zone est réalisée préalablement à la phase d'étalement du vernis.

Selon un autre mode de réalisation, l'élévation ou la diminution de température est réalisée pendant la phase d'étalement du vernis.

Avantageusement, la ou les zones d'élévation ou de diminution de température sont déterminées au moyen d'un masque placé entre la source de chaleur et la surface de la lentille, ou au moyen d'un mouvement relatif de la lentille par rapport à la source de chaleur. La forme du masque utilisée ou le mouvement relatif exercé, sont fonction du gradient de coloration ou des motifs colorés que l'on cherche à obtenir sur la lentille.

Suivant un premier mode de réalisation de l'invention, la zone d'échauffement ou de refroidissement est inférieure à la surface d'une face la lentille.

Dans un mode de réalisation préféré, un gradient de température de tout ou partie de la surface de la lentille est réalisé, de manière à obtenir un gradient de coloration.

Dans un autre mode de réalisation préféré, la température est élevée ou diminuée sur une zone limitée dessinant un motif.

Le vernis coloré selon l'invention est de préférence une dispersion de polymères tels que notamment les sol-gels, les latex poly(méth)acryliques, les latex poly(méth)acryliques -styrène et les latex polyuréthanne, et de pigments organiques dans un solvant volatile susceptible de s'évaporer plus rapidement sous l'effet de l'élévation de la température de la lentille. Parmi les solvants utilisables dans le cadre de l'invention on peut citer à titre illustratif l'eau, la N-méthyl-pyrrilidone, les alcools et notamment les alcools linéaires ou ramifiés présentant une chaîne (C₁-C₆)alkyle, le glycérol et ses dérivés, les cétones telles que les cétones linéaires ou ramifiées présentant une chaîne (C₁-C₆)alkyle et notamment la méthyléthylcétone.

Si la température d'une zone de la surface de la lentille est égale ou supérieure à la température d'évaporation du solvant du vernis, le vernis s'évapore. Plus la température de cette zone est élevée, plus le solvant s'évapore rapidement, ce qui entraîne la hausse de la viscosité du vernis. La hausse de la viscosité du vernis a pour conséquence l'augmentation de son épaisseur sur cette zone. Par conséquent, la couleur du vernis sur cette zone est plus intense (ou plus foncée) que sur les autres zones de la lentille. Cette variation dans la vitesse d'évaporation du solvant (et donc dans la viscosité du vernis) est en relation directe avec la tension de vapeur du solvant du vernis. Par conséquent on comprend que la pression et la nature de l'environnement autour de la lentille sont des paramètres supplémentaires à la température, apte à jouer une influence sur l'épaisseur du dépôt de vernis sur ladite lentille.

L'invention concerne aussi une lentille colorée susceptible d'être obtenue par la mise en oeuvre du procédé de coloration selon l'invention.

Le substrat de la lentille peut être de tout type. A titre indicatif mais non limitatif, on peut citer comme substrat pouvant être utilisé dans le cadre de l'invention les substrats classiquement utilisés en optique et en ophtalmie. Par exemple, sont adaptés les substrats du type polycarbonate; polyamide ; polyimides ; polysulfones ; copolymères de polyéthylènetérephtalate et polycarbonate; polyoléfines, notamment polynorbornènes ; polymères et copolymères de diéthylène glycol bis(allylcarbonate); polymères et copolymères (méth)acryliques notamment polymères et copolymères (méth)acryliques dérivés de bisphenol-A; polymères et copolymères thio(méth)acryliques ; polymères et copolymères uréthane et thiouréthane ; polymères et copolymères époxy et polymères et copolymères épisulfide.

Ladite lentille est de préférence une lentille ophtalmique composée de CR39 ou de polycarbonate.

L'invention a également pour objet un procédé de contrôle de l'épaisseur d'un vernis déposé par spin-coating sur un substrat dont au moins une zone est chauffée ou refroidie de telle manière que le vernis s'évapore en au moins un point de la surface de la lentille. Avantageusement, ce contrôle comprend la vérification et la maîtrise de la variation de la température de la surface de la lentille sur laquelle est déposée le vernis. De préférence, le procédé de contrôle prend en outre en compte la pression et la nature de l'environnement autour de la lentille.

D'autres avantages et caractéristiques de l'invention apparaîtront dans les exemples qui sont donnés à titre non limitatif.

### Exemples

On a coloré des lentilles en utilisant le procédé de l'invention. Les substrats des lentilles utilisées dans cet exemple sont ORMA (polymère de diéthylène glycol bis(allyl carbonate) et CR39, commercialisé par la société PPG. L'épaisseur de ces substrats au centre est inférieure à 3 mm. Les substrats sont chauffés par trempage dans un bain d'eau à 70 °C. Les vernis de coloration déposés sur les substrats sont : le W234 commercialisé par la société Baxenden préparé selon le protocole décrit dans le brevet US5,316,791 et comprenant un mélange de pigments des quatre couleurs bleu, jaune, rouge, noir, ces pigments étant notamment commercialisés par les sociétés Clariant et Toyo.

On a mesuré l'épaisseur du vernis déposé sur le substrat au niveau d'une zone froide et au niveau d'une zone chaude préalablement déterminées, en fonction du temps d'exposition à une lampe à rayonnement infrarouge. Par zone froide on entend la zone de la lentille non soumise au rayonnement. Par zone chaude on entend la zone de ladite lentille soumise audit rayonnement.

Les résultats sont donnés dans le tableau ci-après.

| Temps d'exposition secondes | Epaisseur zone « froide » environ 23°C (en µm) | Epaisseur zone « chaude » environ 70°C (en µm) | Δ |
|---|---|---|---|
| 0 | 3.97 | 3.99 | 0.02 |
| 10 | 4.47 | 6.21 | 1.74 |
| 20 | 4.6 | 7.09 | 2.49 |
| 30 | 4.5 | 7.37 | 2.87 |
| 40 | 4.7 | 8.43 | 3.73 |
| 50 | 4.57 | 8.15 | 3.58 |
| 60 | 4.6 | 8.2 | 3.6 |
| 70 | 5.14 | 8.46 | 3.32 |
| 80 | 4.98 | 8.45 | 3.47 |

Les mesures d'épaisseurs de vernis sur le substrat, montrent des variations d'épaisseurs allant jusqu'à 4 µm entre la zone « froide » et la zone « chaude ». On constate que plus la lentille est chaude, plus l'épaisseur du vernis augmente, et plus la teinte obtenue est foncée.

On observe à partir de 40 secondes un plateau dans l'épaisseur de dépôt du vernis. Ce plateau correspond au temps nécessaire au substrat pour atteindre un équilibre thermique en chacun de ses points. Ce temps augmente avec l'épaisseur de la lentille ainsi que la source de chauffage ou de refroidissement utilisée.

Des mesures de taux de transmission (Tv) de plusieurs échantillons on été réalisés. Le procédé selon l'invention permet aisément d'obtenir tous les grades de coloration (Classe 1 à classe 4) classiquement utilisés dans le domaine des lentilles ophtalmiques. Ainsi un dépôt par spin sur une lentille d'un latex coloré gris à des épaisseurs de 4,43 µm, 6,00 µm et 8,45 µm permet d'obtenir respectivement des Tv de 25% (Classe 2), 15% (Classe 3) et 7,5% (Classe 4).

La teinte obtenue pour une température spécifique appliquée à la surface de la lentille est dépendante de plusieurs paramètres définissables à l'avance tels que la nature du substrat, de sa conductivité thermique, de son épaisseur et de la nature des solvants utilisés dans le vernis de coloration.

## Revendications

1. Procéde de coloration d'une lentille par spin-coating, ledit procédé étant **caractérisé en ce qu'**il comprend les étapes de :
(a) élever ou diminuer la température d'au moins 2 °C d'au moins une zone de la surface de la lentille, ladite zone étant limitée à une partie de la surface de ladite lentille, par tout moyen approprié
(b) simultanément ou successivement, déposer par spin-coating un vernis coloré comprenant un solvant volatil sur toute la surface de ladite lentille.

2. Procédé de coloration selon la revendication 1 **caractérisé en ce que** ledit moyen approprié pour élever ou diminuer la température comprend tout moyen de conduction par un solide ou un liquide, ou de convexion par un gaz.

3. Procédé de coloration selon l'une quelconque des revendications 1 à 2, **caractérisé en ce que** ledit moyen approprié pour élever ou diminuer la température comprend notamment d'appliquer un tampon refroidi ou chauffé sur ladite zone, d'exposer ladite zone à un rayonnement UV ou IR ou de soumettre ladite zone à l'action d'un lit d'air chaud ou d'air refroidi, ou de mettre en contact ladite zone avec un liquide chauffé ou refroidi par rapport à la température ambiante.

4. Procédé de coloration selon l'une quelconque des revendications 1 à 3, **caractérisé en ce que** l'élévation ou la diminution de température est réalisés préalablement à la phase d'étalement du vernis.

5. Procédé de coloration selon l'une quelconque des revendications 1 à 4, **caractérisé en ce que** l'élévation ou la diminution de température est réalisée pendant la phase d'étalement du vernis.

6. Procédé de coloration selon l'une quelconque des revendications 1 à 5, **caractérise en ce que** la zone d'élévation ou de diminution de température est déterminée au moyen d'un masque plané entre la source de chaleur et la surface de la lentille ou d'un mouvement relatif de la lentille par rapport à la source de chaleur.

7. Procédé de coloration selon l'une quelconque des revendication 1 à 6, dans lequel on ménage un gradient de température de tout ou partie surface de la lentille.

8. Procédé de coloration selon l'une quelconque des revendication 1 à 6, dans lequel on élève ou on diminue la température sur une zone limitée dessinant un motif.

9. Procédé de contrôle de l'épaisseur d'un vernis ayant un solvant volatil, déposé par spin-coating sur un substrat, comprenant le chauffage ou le refroidissement d'au moins une zone dudit substrat, de manière à déposer une couche de vernis d'épaisseur variable.

10. Lentille colorée comportant à sa surface une couche de vernis coloré d'épaisseur variable, susceptible d'être obtenue par la mise en oeuvre d'un procédé selon l'une quelconque des revendications 1 à 8.

## Claims

1. Process for colouring a lens by spin coating, said process being **characterized in that** it comprises the steps of:
a) increasing or decreasing by any suitable means the temperature of at least one zone of the lens surface by at least 2°C, said zone being limited to a portion of the lens surface;
b) simultaneously or successively, applying by spin coating a coloured coating comprising a volatile solvent over the entire surface of the lens.

2. Colouring process according to claim 1, **characterized in that** said suitable means of increasing or decreasing the temperature comprises any means of conduction by a solid or a liquid, or convection by a gas.

3. Colouring process according to any of claims 1 or 2, **characterized in that** the suitable means of increasing or decreasing the temperature especially comprises applying a cooled or heated pad to said zone, exposing said zone to UV or IR radiation or subjecting said zone to the action of hot or cooled air or bringing said zone into contact with a liquid that is heated or cooled with respect to room temperature.

4. Coloring process according to any of claims 1 to 3, **characterized in that** the temperature increase or decrease is carried out prior to the coating step.

5. Colouring process according to any of claims 1 to 4, **characterized in that** the temperature increase or decrease is carried out during the coating step.

6. Colouring process according to any of claims 1 to 5, **characterized in that** the zone where the temperature is increased or decreased is delimited by means of a mask placed between the heat source and the lens surface or by a relative movement of the lens with respect to the heat source.

7. Colouring process according to any of claims 1 to 6, **characterized in that** a temperature gradient is set up over all or part of the lens surface.

8. Colouring process according to any of claims 1 to 6, **characterized in that** the temperature is increased or decreased over a fixed image-wise area.

9. Method of controlling the thickness of a coating containing a volatile solvent, applied by spin coating onto a substrate, comprising heating or cooling of at least one zone of said substrate, so as to apply a coating layer of variable thickness.

10. Coloured lens having at its surface a coloured coating layer of variable thickness, obtainable by implementing a process according to any of claims 1 to 8.

## Patentansprüche

1. Färbeverfahren für eine Linse durch Rotationsbeschichtung, wobei das Verfahren **dadurch gekennzeichnet ist, dass** es folgende Schritte umfasst:
a) Anheben oder Verringern der Temperatur um wenigstens 2°C von wenigstens einem Bereich der Oberfläche der Linse, wobei der Bereich auf einen Teil der Oberfläche der Linse beschränkt ist, durch irgend ein geeignetes Mittel,
b) gleichzeitig oder nachfolgend, Aufbringen eines farbigen Lacks, welcher ein flüchtiges Lösungsmittel enthält, durch Rotationsbeschichtung auf die ganze Oberfläche der Linse.

2. Färbeverfahren nach Anspruch 1,
**dadurch gekennzeichnet, dass** das geeignete Mittel zum Anheben oder Verringern der Temperatur irgendein Mittel zur Leitung durch einen Feststoff oder eine Flüssigkeit oder zur Konvektion durch ein Gas umfasst.

3. Färbeverfahren nach einem der Ansprüche 1 bis 2,
**dadurch gekennzeichnet, dass** das geeignete Mittel zum Anheben oder Verringern der Temperatur insbesondere umfasst, einen abgekühlten oder erhitzten Stempel auf den Bereich anzuwenden, den Bereich einer UV- oder IR-Bestrahlung auszusetzen oder den Bereich der Wirkung eines Betts aus warmer Luft oder abgekühlter Luft zu unterziehen, oder den Bereich in Kontakt mit einer in Bezug auf die Umgebungstemperatur erwärmten oder abgekühlten Flüssigkeit zu bringen.

4. Färbeverfahren nach einem der Ansprüche 1 bis 3,
**dadurch gekennzeichnet, dass** die Anhebung oder Verringerung der Temperatur vor der Phase der Verteilung des Lacks durchgeführt wird.

5. Färbeverfahren nach einem der Ansprüche 1 bis 4,
**dadurch gekennzeichnet, dass** die Anhebung oder Verringerung der Temperatur während der Phase der Verteilung des Lacks durchgeführt wird.

6. Färbeverfahren nach einem der Ansprüche 1 bis 5,
**dadurch gekennzeichnet, dass** der Bereich der Anhebung oder Verringerung der Temperatur mittels einer Maske bestimmt wird, die zwischen die Wärmequelle und die Oberfläche der Linse positioniert wird, oder mittels einer Relativbewegung der Linse in Bezug auf die Wärmequelle.

7. Färbeverfahren nach einem der Ansprüche 1 bis 6,
wobei ein Temperaturgradient über die ganze oder einen Teil der Oberfläche der Linse hergestellt wird.

8. Färbeverfahren nach einem der Ansprüche 1 bis 6,
wobei die Temperatur in einem begrenzten Bereich angehoben oder gesenkt wird, der ein Motiv darstellt.

9. Verfahren zum Regeln der Dicke eines en flüchtiges Lösungsmittel enthaltenden Lacks, der durch Rotationsbeschichtung auf ein Substrat aufgetragen wird, umfassend das Erhitzen oder Abkühlen von wenigstens einem Bereich des Substrats, so dass eine LackSchicht variabler Dicke aufgetragen wird.

10. Gefärbte Linse, mit einer Schicht eines farbigen Lacks variabler Dicke auf ihrer Oberfläche, welche durch die Durchführung eines Verfahrens nach einem der Ansprüche 1 bis 8 zu erhalten ist.
